Europäisches Patentamt

(19) European Patent Office

Office européen des brevets

(11) Publication number : **0 399 793 B1**

(12) **EUROPEAN PATENT SPECIFICATION**

(45) Date of publication of patent specification :
29.12.93 Bulletin 93/52

(51) Int. Cl.⁵ : **B65D 83/14, C08L 55/02**

(21) Application number : **90305570.5**

(22) Date of filing : **22.05.90**

(54) **Vessel for an aerosol.**

The file contains technical information
submitted after the application was filed and
not included in this specification

(30) Priority : **23.05.89 JP 127760/89**

(43) Date of publication of application :
**28.11.90 Bulletin 90/48**

(45) Publication of the grant of the patent :
**29.12.93 Bulletin 93/52**

(84) Designated Contracting States :
**DE FR**

(56) References cited :
FR-A- 2 038 297
FR-A- 2 214 713
FR-A- 2 316 266
WPIL, FILE SUPPLIER, AN=90-158626, Der-
went Publications Ltd, London, GB; & JP-A-01
240 468 (MITSUI TOATSU) 26-09-1989
WPIL, FILE SUPPLIER, AN=89-029189, Der-
went Publications Ltd, London, GB; & JP-A-63
304 015 (MITSUI TOATSU) 12-12-1988
WPIL, FILE SUPPLIER, AN=90-315540, Der-
went Publications Ltd, London, GB; & JP-A-02
222 741 (MITSUI TOATSU) 05-09-1990
WPIL, FILE SUPPLIER, AN=87-296045, Der-
went Publications Ltd, London, GB; & JP-A-62
208 379 (MITSUI TOATSU) 12-09-1987

(73) Proprietor : **MITSUI TOATSU CHEMICALS, Inc.**
**2-5 Kasumigaseki 3-chome**
**Chiyoda-Ku Tokyo 100 (JP)**
Proprietor : **KABUSHIKI GAISHA TOKAI**
**Enokiyado 2181-7, Kitahassaku-Cho,**
**Midori-Ku**
**Yokohama-shi, Kanagawa-Ken 226 (JP)**

(72) Inventor : **Amemiya, Hideo**
**Iijima-Cho 2882, Sakae-Ku**
**Yokohama-Shi, Kanagawa, 244 (JP)**
Inventor : **Kuroda, Minoru**
**Kishi.Machi 2-4-18**
**Urawa-Shi, Saitama-ken, 336 (JP)**
Inventor : **Shike, Tsutomu**
**Hokkubara 584-6**
**Gotenba-shi, Shizuoka-Ken, 412 (JP)**
Inventor : **Minagawa, Mikio**
**Osaka 305-10**
**Gotenba-shi, Shizuoka-Ken, 412 (JP)**

(74) Representative : **Hutchins, Michael Richard et**
**al**
**Graham Watt & Co. London Road Riverhead**
**Sevenoaks, Kent TN13 2BN (GB)**

## Description

## Technical Field

The present invention relates to a vessel for an aerosol, which vessel is made of a high-nitrile resin and, more particularly, to a vessel made of a high-nitrile resin which is excellent in heat resistance, water resistance, and environmental stress crack resistance. The vessel, in particular, is intended for storing an ethanolic solution.

## Background of the Invention

Hitherto, vessels for containing aerosols of hair spray, insecticide, and the like are mainly made of metal such as tin, aluminum, or the like. In recent years, aerosol-containing vessels made of plastics have been put into practical use. Polyester, high-nitrile resin, or the like is used for such a container.

Particularly, the high-nitrile resin is suitable because it is excellent in gas barrier property and chemical resistance, and its practical use is progressing.

However, since the high-nitrile resin is hygroscopic, if the contents of the vessel include water, the vessel itself absorbs the moisture and a softening temperature decreases, so that there is a problem such that the vessel is deformed due to an increase in inner pressure at high temperatures of 50 to 70°C.

On the other hand, in the case of vessels made of a resin, not only the cylindrical vessels such as a conventional vessel made of metal but also heteromorphic vessels having a cross section of an ellipse, a rectangle, or the like, can be obtained. However, at high temperatures of 50 to 70°C, there is a problem such that what are called environmental stress cracks occur depending on the vessel shape, that is, the inner pressure increases at such high temperatures, stresses are concentrated on a part of the container, chemicals of the content contact this part, and cracks are caused.

It is an object of the present invention to solve the foregoing problems and to provide a vessel for an aerosol made of plastics which is excellent in heat resistance, water resistance, and environmental stress crack resistance, and which is applicable to the storage of ethanolic solutions.

The present inventors have studied and examined in order to obtain a vessel for an aerosol which can satisfy the above object, so that they have found out that by using a special high-nitrile resin, it is possible to obtain a vessel for an aerosol which is excellent in heat resistance, water resistance, and environmental stress crack resistance, and thus they arrived at the present invention.

FR-A-2,316,266 discloses a high-nitrile resin comprising an unsaturated nitrile compound such as acrylonitrile and an alkenyl aromatic compound which are grafted to dien synthetic rubbers such as butadiene-acrylonitrile rubber, and shows uses of such resins for numerous purposes. Amongst these are pressurized bottles because the polymer is asserted to have excellent properties on transparency, barrier characteristics, heat distortion temperature and impact resistance. This prior document does not describe or contemplate the problems besetting the construction of an aerosol container for holding ethanolic solutions.

WPIL FILE SUPPLIER AN 87-296045 discloses an aerosol container for agrochemicals which is injection molded from a copolymer of an unsaturated nitrile such as acrylonitrile with a comonomer such as styrene, butadiene etc. containing 50% by weight of acrylonitrile. Again, this prior document does not contemplate the problems besetting the production of aerosol containers intended for holding ethanolic solutions.

Neither of the aforementioned prior documents reports on the relationship (of X and Y noted below) between the amount of unsaturated nitrile compound grafted to rubbers and the amount of said compound in the polymer matrix:

The invention provides use of an aerosol vessel for storing a solution containing ethanol, whose body is made of a high-nitrile resin composed of a high-nitrile polymer matrix and a high-nitrile rubber graft copolymer, wherein said high-nitrile resin is obtained by polymerizing 60 to 90 parts by weight of a mixture of monomers, comprising at least 60 weight % of an unsaturated nitrile compound and at least 5 weight % of an aromatic vinyl compound, with 1 to 40 parts by weight of diene synthetic rubbers containing 50 weight % or more of a conjugated diene monomer, the amount ($X$% by weight) of unsaturated nitrile compound in the resin grafted to the rubbers and the amount ($Y$% by weight) of unsaturated nitrile compound in the polymer matrix satisfying the relationship:

$$60 < X \leq Y < 90.$$

The invention also provides an aerosol vessel containing an ethanolic solution, whose body is made of a high-nitrile resin composed of a high-nitrile polymer matrix and a high-nitrile rubber graft copolymer, wherein said high-nitrile resin is obtained by polymerizing 60 to 90 parts by weight of a mixture of monomers comprising at least 60 weight % of an unsaturated nitrile compound and at least 5 weight % of an aromatic vinyl compound, with 1 to 40 parts by weight of diene synthetic rubbers containing 50 weight % or more of a conjugated diene monomer, the amount ($X$% by weight) of unsaturated nitrile compound in the resin grafted to the rubbers and the amount ($Y$% by weight) of unsaturated nitrile compound in the polymer matrix satisfying the relationship:

$$60 < X \leq Y < 90.$$

The conjugated diene synthetic rubber which is used in the invention is a copolymer of a conjugated diene monomer of 50 weight % or more and at least one kind of monomer selected from an unsaturated nitrile compound copolymerizable with it, an aromatic vinyl compound, an unsaturated carboxylic ester, and the like. As a conjugated diene monomer, there are shown 1,3-butadiene, isoprene, chloroprene, 2,3-dimethyl-1,3-butadiene, 2,3-diethyl-1,3-butadiene, and the like as examples.

As an unsaturated nitrile compound, there can be mentioned acrylonitrile, methacrylonitrile, $\alpha$-chloroacrylonitrile, and the like, preferably, acrylonitrile and methacrylonitrile.

On the other hand, as an aromatic vinyl compound, there can be mentioned styrene, $\alpha$-methylstyrene, vinyltoluene, vinylxylenes, and the like. Styrene and $\alpha$-methylstyrene are preferable.

As an unsaturated carboxylic ester, there can be mentioned esters of methyl, ethyl, propyl, or butyl acrylate or methacrylate or the like. Particularly, methyl acrylate, ethyl acrylate, methyl methacrylate, and ethyl methacrylate are preferable.

As a monomer grafted to conjugated diene synthetic rubbers, in addition to the unsaturated nitrile compound and aromatic vinyl compound, there can be mentioned a vinyl compound having the copolymerization therewith, for instance, monomers of the foregoing unsaturated carboxylic ester, vinyl ester, vinyl ether, $\alpha$-olefin, and the like. However, unsaturated carboxylic ester is suitable from a viewpoint of the balance between the shock resistance and the flowability upon molding work.

The high-nitrile resin part excluding the rubber compound needs to contain an unsaturated nitrile compound of at least 60 weight % or more because in the case where the content of unsaturated nitrile compound is less than 60 weight %, the inherent characteristics such as chemical resistance, gas tightness, and the like of the nitrile resin are lost. On the other hand, when the content of unsaturated nitrile compound exceeds 90 weight %, there are problems such as deterioration in flowability upon molding work, shock resistance, and the like and yellowing of the resin upon molding.

Explaining in more detail, the amount (X% by weight) of the unsaturated nitrile compound grafted to rubber and the amount (Y% by weight) of said compound in the polymer matrix must be set to values within a range from 60 to 90 weight %. At the same time, it is necessary to satisfy the relation of $X \leqq Y$, that is, it is necessary that the content of the unsaturated nitrile compound in the matrix resin is at least equal to or larger than the content of the unsaturated nitrile compound in the grafted resin.

The aromatic vinyl compound needs to be set to at least 5 weight %. It is practically preferable to set to 10 weight % or more to improve the heat resistance and water resistance.

An amount of other vinyl compound which can be used without losing the object of the invention is set to a value of up to 25 weight % in the mixture of monomers. The mixture of monomers which is used in the specification substantially denotes only a vinyl monomer and does not contain what is called a diluent or the like. However, a diluent or the like may be also used in manufacturing.

The content of rubbers in all of the resins is set to a value of 1 to 40 parts by weight. However, a range of 5 to 30 parts by weight is desirable from a viewpoint of the balance between the shock resistance and the flowability upon molding work.

The resin of the invention is obtained by polymerizing a mixture of monomers containing the unsaturated nitrile compound and aromatic vinyl compound under the existence of conjugated diene synthetic rubbers. As a polymerizing method, there can be used well-known solution polymerization, bulk polymerization, emulsion polymerization, suspension polymerization, a polymerizing method of an arbitrary combination of them, and the like. From an industrial viewpoint, the emulsion polymerization is preferable because of the easiness in elimination of the heat of reaction and in execution of the post-process of the polymerization.

The high-nitrile resin which is used in the invention can also contain a plasticizer, a stabilizer, a lubricant, a dye, a pigment, a filler, and the like, and a small amount of other resin.

The aerosol vessel of the invention is manufactured by using a high-nitrile resin of special compositions as mentioned above. As its manufacturing method, for instance, a vessel body is molded by a method such as injected molding, injection-blow molding, extrusion-blow molding, injection-stretch-blow molding, extrusion-stretch blow molding, or the like and a cap portion to which parts such as an Spray nozzle and the like are assembled is airtightly integrated with the vessel body, thereby obtaining a container. Any one of the above manufacturing methods can be used.

As a method whereby a cap portion (to which parts such as a Spray nozzle and the like are assembled) is airtightly integrated with the vessel body, there is provided a method whereby a cap portion, which is molded from a resin which can be melted and bonded to the vessel body, is melted and bonded by a method such as ultrasonic melt-bonding, high frequency melt-bonding, spin welding, or the like, a method whereby a metallic cap portion is wound and fastened around the vessel body, and the like. However, any method can be used if the practical airtightness is obtained.

The container according to the invention is advantageous as a vessel for aerosol for storing an ethanolic solution for cosmetics, toiletry supplies, medicines, automobile supplies, industrial supplies, insecticide, germicide, antiphlogistic, hair conditioners, cleaner, and the like.

Further, the above container is also suitable to store acid and alkaline solutions which cannot be used hitherto in a metal can. The above vessel can be used to store a liquid of a PH value in a range of 2 to 13.

## Brief Description of the Drawings

The drawing is a diagram of a cross sectional view showing an embodiment of a vessel for aerosol according to the present invention.

## Preferred Embodiments of the Invention

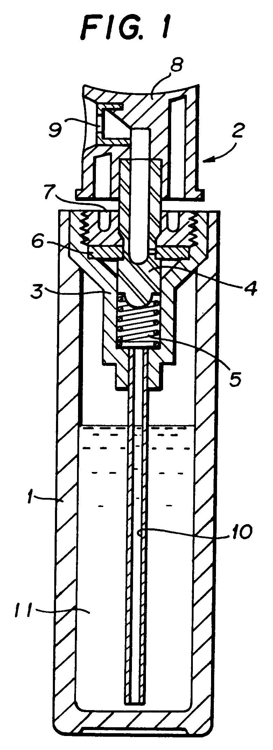

In Fig. 1, reference numeral 1 denotes a container and 2 indicates an spray valve assembly. The spray valve assembly 2 comprises; a housing 3; a valve 4; a spring 5; a packing 6; a sealing member 7; a push button 8; a nozzle 9; and a tube 10.

Since the operations of those parts are well known, their descriptions are omitted here. However, in the invention, parts which are manufactured by using a high-nitrile resin include not only the vessel 1 but also the housing 3 and valve 4.

The invention will be described hereinbelow with respect to embodiments.

## [Embodiment 1]

A high-nitrile resin was obtained by polymerizing a mixture comprising acrylonitrile (75 parts by weight) and styrene (25 parts by weight) in the presence of 10 parts by weight of a butadiene-acrylonitrile rubber-like copolymer (62 weight % butadiene).

The resin was dissolved in a solvent which was a mixture of dimethylformamide and acetonitrile in the ratio of 1:1. The resin was then separated into a grafted portion which is insoluble in the solvent and a matrix portion which is soluble in the solvent. Compositions of monomers in the respective resins were examined. Thus, the grafted resin was composed of acrylonitrile (65 weight %) and styrene (35 weight %). On the other hand, the matrix resin was composed of acrylonitrile (73 weight %) and styrene (27 weight %).

A vessel body was obtained by using the above high-nitrile resin by injection molding it by an injection molding apparatus FS80S12ASE made by Nissei Plastic Industrial Co. Ltd.

The vessel obtained had a shape such that a cross section of a central portion of the container had a rectangular shape whose width was set to about 3.5cm and whose thickness was set to about 3cm and that a height was set to about 10cm, a thickness of resin was set to about 2.3mm, and a volume was set to about 75cc.

A cap member was obtained by injection molding the same high-nitrile resin to which injection apparatus parts had been assembled. Such a cap member was melted and bonded to the vessel body by an Ultrasonic melt-bonding method and was sealed. After that, the pressure resistant strength by the water pressure was examined.

The pressure resistant strengths were examined with respect to ten containers. Thus, in all of them, an abnormality such as occurence of cracks or the like was not found even when a pressure of $40kg/cm^2$ was applied.

On the other hand, the water was poured into the vessel body and the inner pressure was set to $3.5kg/cm^2$ (at room temperature) of $CCl_3F$ (Freon 11) and $CCl_2F_2$ (Freon 12). A cap member was obtained by injection molding the same high-nitrile resin from which injection apparatus parts had been assembled. Such a cap member was melted and bonded to the vessel body by the ultrasonic melt-bonding method and sealed.

Ten vessels were prepared as mentioned above and left at room temperature for one week. After that, the ten containers were left at 60°C for 24 hours. However, generation of cracks was not found.

## [Embodiment 2]

A high-nitrile resin was obtained by polymerizing a mixture comprising acrylonitrile (75 parts by weight), styrene (15 parts by weight) and methyl methacrylate (10 parts by weight) in the presence of 10 parts by weight of a butadiene-acrylonitrile rubber-like copolymer (70 weight % butadiene).

Such a resin was dissolved in a solvent mixture in which dimethylformamide and acetonitrile were mixed in the ratio 1:1. The resin was then separated into a grafted portion which is insoluble in the solvent and a matrix portion which is soluble in the solvent. The monomer compositions in the respective resins were examined. Thus, the grafted resin was composed of acrylonitrile (72 weight %), styrene (18 weight %) and methyl methacrylate (10 weight %). The matrix resin was composed of acrylonitrile (74 weight %), styrene (14 weight %), and methyl methacrylate (12 weight %).

The water pressure tests and the tests for the water and ethanol were executed in a manner similar to the embodiment 1 except that the above resin was used. Thus, no abnormality was found in any of the above cases.

## [Comparison 1]

A high-nitrile resin was obtained by polymerizing a mixture comprising acrylonitrile (55 parts by weight), styrene (35 parts by weight) and methyl methacrylate (10 parts by weight) in the presence of 10 parts by weight of a butadiene-acrylonitrile rubber-like copolymer (68 weight % butadiene).

The above resin was dissolved in a solvent mixture in which dimethylformamide and acetonitrile were mixed in the ratio 1:1. The resin was then separated into a grafted portion which is insoluble in the solvent and a matrix portion which is soluble in the solvent.

The monomer compositions in the respective resins were examined. Thus, the grafted resin was composed of acrylonitrile (45 weight %), styrene (47 weight %) and methyl methacrylate (8 weight %). The matrix resin was composed of acrylonitrile (52 weight %), styrene (38 weight %), and methyl methacrylate (10 weight %).

The water pressure tests and the tests for the water and ethanol were executed in a manner similar to the embodiment 1 except that the above resin was used.

In the water pressure tests, no abnormality was found. However, in all of the vessels filled with the water, the central portions of the vessels were apparently clearly expanded. When the dimensions were actually measured in the direction of thickness of the central portions of the containers, the dimensions were increased by about 4mm. On the other hand, in the case of the vessels filled with ethanol, the generation of cracks was found in the corner portions of four vessels among the ten containers.

[Comparison 2]

A high-nitrile resin was obtained by polymerizing a mixture comprising acrylonitrile (95 parts by weight) and styrene (5 parts by weight) in the presence of 10 parts by weight of a butadiene-acrylonitrile rubber like copolymer (62 weight % butadiene).

The above resin was dissolved in a solvent mixture in which dimethylformamide and acetonitrile were mixed in the ratio 1:1. Then resin was then separated into a grafted portion which is insoluble in the solvent. The monomer compositions in the respective resins were examined. Thus, the grafted resin was composed of acrylonitrile (90 weight %), styrene (10 weight %). The matrix resin was composed of acrylonitrile (95 weight %), and styrene (5 weight %).

A vessel body was obtained by injection molding by using the above resin in a manner similar to the embodiment 1. However, the yellowing was remarkable.

The water pressure tests and the tests in the case where the water and ethanol were filled in the vessels were executed by using the above vessels in a manner similar to the embodiment 1.

In the water pressure tests, cracks were generated at pressures of 15 to 20kg/cm$^2$ in all of the containers and the withstanding pressure strengths were low.

On the other hand, in the case of the vessels filled with the water, no external appearance change was found. However, in the containers filled with ethanol, the generation of cracks was found in all of the ten vessels.

[Embodiment 3]

A high-nitrile resin was obtained by polymerizing monomer compositions (100 parts by weight) comprising acrylonitrile (70 parts by weight), methyl acrylate (10 parts by weight), and styrene (20 parts by weight) in the presence of 10 parts by weight of a butadiene-acrylonitrile rubber-like copolymer (70 weight % butadiene).

The resin was dissolved in a solvent mixture in which dimethylformamide and acetonitrile were mixed in the ratio 1:1. Then resin was then separated into a grafted portion which is insoluble in the solvent and a matrix portion which is soluble in the solvent. The monomer compositions in the respective resins were examined. Thus, the grafted resin was composed of acrylonitrile (64 weight %), methyl acrylate (9 weight %), and styrene (27 weight %). The matrix resin was composed of acrylonitrile ( 69 weight %), methyl acrylate (11 weight %) and styrene (20 weight %).

A vessel body was obtained by injection molding the above high-nitryl resin by using the injection molding apparatus FS80S12ASE made by Nissei Plastic Industrial Co., Ltd.

The container obtained had a shape such that a cross section of the central portion of the vessel had a rectangular shape whose width was set to about 3.5 cm and whose thickness was set to about 3 cm and that a height was set to about 10 cm, a thickness of resin was set to about 2.3 mm, and a volume was set to about 75 cc.

On the other hand, parts were manufactured by the injection molding by using the same high-nitrile resin as that mentioned above and a valve was assembled.

A sulfate aqueous solution which was adjusted to PH 4 was poured into the vessel body and the inner pressure was set to 5.5 kg/cm$^2$ by gas mixture of Freon 11 and Freon 12. A housing to which injection apparatus parts had been assembled was melted and bonded to the container body by an ultrasonic melt-bonding method and was sealed.

Ten vessels were prepared as mentioned above and left at a room temperature for six months. Thus, in all of the ten containers, a reduction in inner pressure and an external abnormality were not found.

On the other hand, ten vessels which were separately adjusted were repetitively dropped ten times onto the floor of the plastic tiles from a position of a height of 1.2m at room temperature. However, no damage was found in any of the ten vessels.

The ten vessels were left at 60°C for 25 hours in a manner similar to the embodiment 1. However, abnormalities such as deformation, generation of cracks, and the like were not found.

[Embodiment 4]

A high-nitrile resin was obtained by polymerizing monomer compounds (100 parts by weight) comprising acrylonitrile (80 parts by weight), methyl acrylate (5 parts by weight), and styrene (15 parts by weight) in the presence of 8 parts by weight of a butadiene-acrylonitrile rubber-like copolymer (70 weight % butadiene).

The above resin was dissolved in a solvent mixture in which dimethylformamide and acetonitrile were mixed in the ratio 1:1. The resin was then separated into a grafted portion which is insoluble in the solvent and a matrix portion which is soluble in the solvent. The monomer compositions in the respective resins were examined. Thus, the grafted resin was composed of acrylonitrile (76 weight %), methyl acrylate (6 weight %) and styrene (18 weight %). The matrix resin was composed of acrylonitrile (78 weight %), methyl acrylate (5 weight %) and styrene (17 weight %).

A vessel was formed in a manner similar to the embodiment 3 except that the above high-nitrile resin was used and a sodium hydroxide aqueous solution which had been adjusted to PH 10 was used.

The container was filled, the vessel was sealed, and the tests similar to those in the embodiment 3 were executed.

As results of the tests, a decrease in inner pressure, an external abnormality and damage were not found.

[Embodiment 5]

A depilatory of PH 12.6 was poured into the same vessels as those used in the embodiments 3 and 4 and the tests similar to those in the embodiment 3 were executed.

As results of the tests, a decrease in inner pressure and other external abnormalities were not found.

[Embodiment 6]

A water repellant agent of PH 2.5 was poured into the same vessels as those used in the embodiments 3 and 4 and the tests similar to those in the embodiment 3 were executed.

As results of the tests, a decrease in inner pressure and other external abnormalities were not found.

The word "FREON" used hereinbefore is acknowledged to be a Registered Trade Mark.

## Claims

1. Use of an aerosol vessel for storing a solution containing ethanol, whose body is made of a high-nitrile resin composed of a high-nitrile polymer matrix and a high-nitrile rubber graft copolymer, wherein said high-nitrile resin is obtained by polymerizing 60 to 90 parts by weight of a mixture of monomers, comprising at least 60 weight % of an unsaturated nitrile compound and at least 5 weight % of an aromatic vinyl compound, with 1 to 40 parts by weight of diene synthetic rubbers containing 50 weight % or more of a conjugated diene monomer, the amount (X% by weight) of unsaturated nitrile compound in the resin grafted to the rubbers and the amount (Y% by weight) of unsaturated nitrile compound in the polymer matrix satisfying the relationship:

$$60 < X \leqq Y < 90.$$

2. An aerosol vessel containing an ethanolic solution, whose body is made of a high-nitrile resin composed of a high-nitrile matrix and a high-nitrile rubber graft copolymer, wherein said high-nitrile resin is obtained by polymerizing 60 to 90 parts by weight of a mixture of monomers comprising at least 60 weight % of an unsaturated nitrile compound and at least 5 weight % of an aromatic vinyl compound, with 1 to 40 parts by weight of diene synthetic rubbers containing 50 weight % or more of a conjugated diene monomer, the amount (X% by weight) of unsaturated nitrile compound in the resin grafted to the rubbers and the amount (Y% by weight) of unsaturated nitrile compound in the polymer matrix satisfying the relationship:

$$60 < X \leqq Y < 90.$$

## Patentansprüche

1. Verwendung eines Aerosolbehälters zum Aufbewahren einer Lösung, die Äthanol enthält, dessen Gehäuse aus einem Harz mit hohem Nitrilgehalt hergestellt ist, das aus einer hochnitrilhaltigen Polymermatrix und einem hochnitrilhaltigen Gummipfropfcopolymer zusammengesetzt ist, wobei das Harz mit hohem Nitrilgehalt durch Polymerisieren von 60 bis 90 Gewichtsteilen eines Gemisches von Monomeren, das wenigstens 60 Gew.-% einer ungesättigten Nitrilverbindung und wenigstens 5 Gew.-% einer aromatischen Vinylverbindung umfaßt, mit 1 bis 40 Gewichtsteilen synthetischen Dien-Gummis, die 50 Gew.-% oder mehr eines konjugierten Dien-Monomeren enthalten, erhalten worden ist, wobei die Menge (X Gew.-%) an ungesättigter Nitrilverbindung in dem Harz, das an die Gummis gepropft ist, und die Menge (Y Gew.-%) an ungesättigter Nitrilverbindung in der Polymermatrix die Beziehung erfüllen:

$$60 < X \leqq Y < 90.$$

2. Ein Aerosolbehälter, der eine äthanolische Lösung enthält, dessen Gehäuse aus einem Harz mit hohem Nitrilgehalt hergestellt ist, das aus einer hochnitrilhaltigen Matrix und einem hochnitrilhaltigen Gummipfropfcopolymer zusammengesetzt ist, wobei das Harz mit hohem Nitrilgehalt durch Polymerisieren von 60 bis 90 Gewichtsteilen eines Gemisches von Monomeren, die wenigstens 60 Gew.-% einer ungesättigten Nitrilverbindung und wenigstens 5 Gew.-% einer aromatischen Vinylverbindung umfassen, mit 1 bis 40 Gewichtsteilen synthetischen Dien-Gummis, die 50 Gew.-% oder mehr eines konjugierten Dien-Monomeren enthalten, erhalten worden ist, wobei die Menge (X Gew.-%) an ungesättigter Nitrilverbindung in dem Harz, das an die Gummis gepropft ist, und die Menge (Y Gew.-%) an ungesättigter Nitrilverbindung in der Polymermatrix die Beziehung erfüllen:

$$60 < X \leqq Y < 90.$$

## Revendications

1. Utilisation, pour renfermer une solution contenant de l'éthanol, d'une bombe aérosol dont le corps est fait d'une résine haute teneur en nitrile composée d'une matrice de polymère à haute teneur en nitrile et d'un copolymère greffé de caoutchouc à haute teneur en nitrile, ladite résine à haute teneur en nitrile étant obtenue par polymérisation de 60 à 90 parties en poids d'un mélange de monomères, comprenant au moins 60% en poids d'un nitrile insaturé et au moins 5% en poids d'un composé vinylaromatique, avec 1 à 40 parties en poids de caoutchoucs synthétiques de diène contenant 50% en poids ou plus d'un diène conjugué monomère, la quantité (X% en poids) de nitrile insaturé dans la résine greffée sur les caoutchoucs et la quantité (Y% en poids) de nitrile insaturé dans la matrice de polymère satisfaisant à la relation

$$60 < X \leqq Y < 90.$$

2. Bombe aérosol contenant une solution éthanolique, dont le corps est fait d'une résine à haute teneur en nitrile composée d'une matrice à haute teneur en nitrile et d'un copolymère greffé de caoutchouc à haute teneur en nitrile, ladite résine à haute teneur en nitrile etant obtenue par polymérisation de 60 à 90 parties en poids d'un mélange de monomères, comprenant au moins 60% en poids d'un nitrile insaturé et au moins 5% en poids d'un composé vinylaromatique, avec 1 à 40 parties en poids de caoutchoucs synthétiques de diène contenant 50% en poids ou plus d'un diène conjugue monomére, la quantité (X% en poids) de nitrile insaturé dans la résine greffée sur les caoutchoucs et la quantité (Y% en poids) de nitrile insaturé dans la matrice de polymère satisfaisant à la relation

$$60 < X \leqq Y < 90.$$

## FIG. 1